# FASCICULE DE BREVET EUROPEEN

(11) **EP 2 470 453 B1**
(45) Date de publication et mention de la délivrance du brevet: **29.04.2015**
(21) Numéro de dépôt: 10765489.9
(22) Date de dépôt: 19.08.2010
(51) Int. Cl.: B65D 85/804

(54) **POCHETTE POUR LA PREPARATION D'UNE BOISSON**
BEUTEL ZUR HERSTELLUNG EINES GETRÄNKS
POUCH FOR PREPARING A BEVERAGE

(30) Priorité: 29.08.2009 WO PCT/IB2009/053778
(43) Date de publication de la demande: 04.07.2012
(73) Titulaire: PSR Profitable Strategic Redeployment Sarl, 1700 Fribourg (CH)
(72) Inventeur: MARILLER, Alain, 1801 Le Mont-Pèlerin (CH)
(74) Mandataire: Grosfillier, Philippe
(86) Numéro de dépôt international: PCT/IB2010/053742
(87) Numéro de publication internationale: WO 2011/024103

(56) Documents cités:
- EP-A1- 0 455 337
- EP-A1- 0 638 486
- WO-A1-99/05044
- GB-A- 2 123 685
- US-B1- 6 347 725

## Description

### Domaine de l'invention

L'invention concerne la préparation de boissons, p.ex. du café, par introduction d'eau dans un élément contenant une dose concentrée, p.ex. de café moulu, et par extraction du mélange ainsi obtenu.

### Etat de la technique

On connaît divers types d'éléments contenant une dose concentrée au travers desquels de l'eau et introduite, mélangée à la dose concentrée, puis extraite de l'élément. Voir à titre d'exemple l'élément divulgué dans la demande de brevet internationale WO 99/05044 A1 qui correspond à l'objet du préambule de la présente revendication 1.

L'élément se présente p.ex. sous forme de capsule ou de pochette.

L'introduction d'eau dans l'élément est réalisée par perçage d'au moins une paroi de l'élément. L'extraction peut être réalisée par perçage, déchirement ou éclatement d'une paroi de l'élément.

### Exposé général de l'invention

Un des objectifs de l'invention consiste à offrir un élément pour la préparation d'une boisson qui ne doit pas être percé, déchiré ou éclaté lors de l'introduction et/ou l'extraction de liquide.

Dans l'invention, cet objectif est réalisé au moyen d'une pochette comprenant un volume destiné à contenir une dose concentrée, un orifice d'entrée et un orifice de sortie, tous deux communiquant avec ledit volume.

Selon un premier mode de réalisation de l'invention les deux orifices sont disposés à proximité l'un de l'autre.

De préférence, la pochette comprend un élément tubulaire formé de deux extrémités, la première étant reliée à l'un des orifices, l'autre étant disposée dans ledit volume, en un endroit distant de l'autre orifice, de manière à ce que le mélange eau-dose soit optimal.

Avantageusement, l'élément tubulaire est relié à l'orifice d'entrée.

Selon une variante, l'élément tubulaire est formé à partir d'une bande, constituée p.ex. du même matériau que celui qui constitue les parois de la pochette, dont les bords sont collés sur l'une des faces internes de la pochette.

De préférence, la pochette est adaptée pour être disposée verticalement en mode actif. Cette disposition offre la possibilité de tirer parti de la force de gravitation qui entraîne le liquide vers le bas de la pochette. Cette avantage étant particulièrement utile lorsque les deux orifices sont disposés dans la partie supérieure de la pochette.

Selon une autre variante, la pochette comprend une pièce rigide adaptée pour être fixée dans un dispositif d'extraction.

Dans cette configuration, la pièce rigide peut comporter les orifices.

On relèvera ici que la pièce rigide ne doit pas être nécessairement rigide. Ce mode de réalisation est toutefois privilégié car il assure une meilleure stabilité et fixation de la pochette lorsque celle-ci est dans le dispositif.

Les parois de la pochette peuvent être flexibles, semi-rigides ou entièrement rigides.

L'invention concerne également un dispositif pour l'extraction d'une boisson adapté pour l'utilisation d'une pochette telle que définie précédemment.

Selon une variante le dispositif comporte deux conduits d'entrée d'eau disposés de manière à relier deux faces opposées de la pochette. Ce mode de réalisation a pour avantage d'insérer indifféremment la pochette dans un sens ou dans l'autre dans le dispositif.

### Exposé détaillé de l'invention

L'invention est décrite plus en détail ci-après au moyen d'exemples illustrés par les figures suivantes :

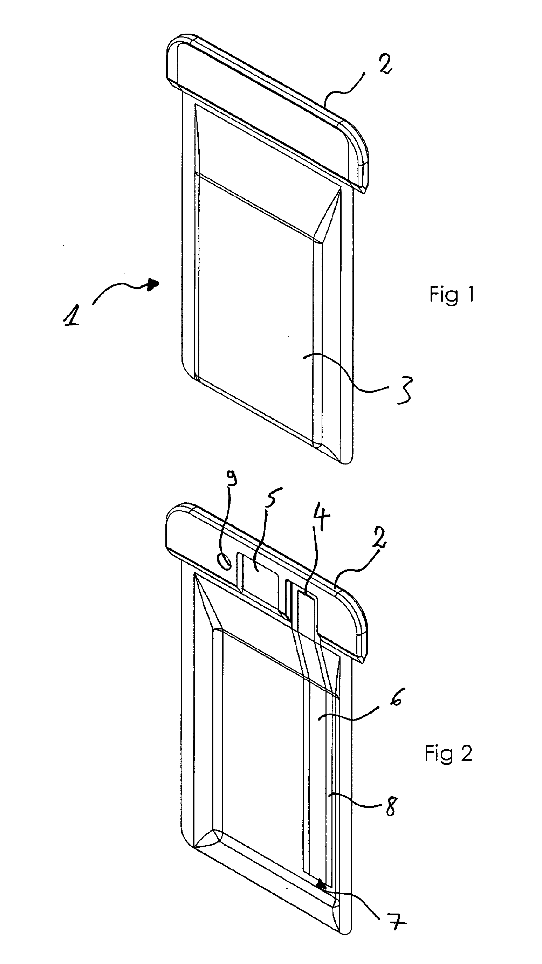

La figure 1 présente une pochette complète 1, avec des parois en matière souple, semi-rigide, ou rigide, qui se constitue de deux pièces principales, soit une pièce rigide 2 et un sachet 3. Dans cet exemple, la pièce rigide 2 étant spécialement conçue pour une injection d'eau chaude originale (la pochette peut contenir du café ou autres produits en poudre à extraire ou dissoudre).
   Le sachet 3, qui contient une dose concentrée, en NatureFlex, mais toute autre matière flexible ou rigide, biodégradable ou non, peut être utilisée.
La figure 2 illustre une coupe verticale de la pochette de la figure 1. La partie à droite sert à injecter l'eau via un orifice d'entrée 4 et la canaliser dans un élément tubulaire 6 pour l'envoyer dans la partie inférieure de la pochette. Ce canal 6 est constitué préférablement par simple soudure d'une bande constituée de la même matière que les parois du sachet 3, NatureFlex par exemple, de sorte que l'eau est conduite vers le bas de la dose sans pouvoir s'échapper avant d'arriver en bas. Dans ce cas de figure, les bords de la bande sont collés sur la face interne du sachet 3.

L'eau est injectée au niveau de la pièce rigide 2, elle-même étant soudée horizontalement au sachet 3 afin de forcer l'eau vers le seul chemin possible qui, dans l'exemple illustré, est vers le bas. Toute autre solution utilisant le même principe de forcer l'eau vers un endroit distant de l'orifice d'entrée, par exemple au moyen d'un tuyau, est évidemment possible dans le cadre de la présente invention.

Dans ce mode de réalisation , l'élément tubulaire 6 est donc rendu solidaire de la pièce rigide 2.

A noter que l'élément tubulaire 6 peut être disposé de différente manière dans le sachet 3, p.ex. travers, en Z ou en colimaçon, ou toute autre façon permettant d'assurer un mélange optimal de l'eau avec la dose concentrée. Il est également possible de relier l'élément tubulaire 6 à l'orifice de sortie 5, voire de relier chaque orifice 4,5 à un élément tubulaire.

L'élément tubulaire 6 peut également comporter des petits trous sur sa longueur, ce qui induirait un pré-mouillage de la dose, préalablement au mélange.

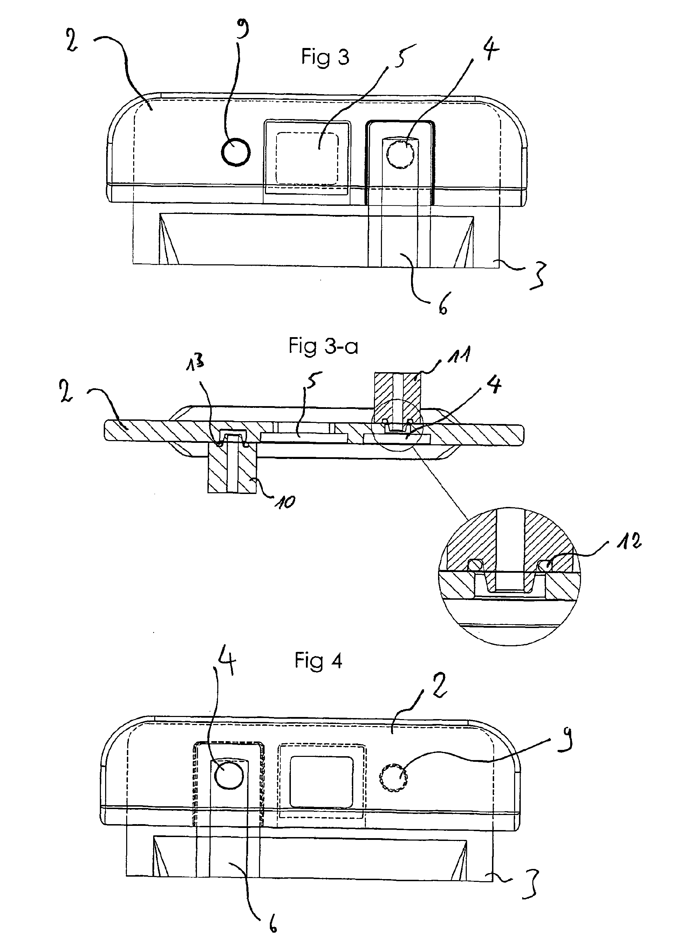

La figure 3 est une coupe illustrant les détails de la pièce rigide 2. L'eau est injectée sur la partie droite de la pièce rigide, p.ex. au moyen d'une buse ou tout autre mécanisme adéquat, depuis la face cachée sur la figure.

On voit également - au centre à peu près - l'orifice de sortie 5, où le mélange eau-dose ressort à travers un élément filtrant qui empêche la poudre contenue dans la dose de s'échapper mais permet au liquide extrait ou chargé de matière soluble de passer.

Le trou rond 9 à gauche de l'orifice de sortie 5 permet d'insérer la pochette 1 de façon indifférente dans le dispositif (voir figure 3 a). Le trou 9 ne traverse pas de part en part la pièce rigide 2 mais est constitué d'un évidement qui s'arrête à mi-chemin sous la forme d'une paroi plate (trou borgne).

La figure 3a représente le dispositif d'injection à deux buses 10,11 (amenées par deux mâchoires non illustrées). Dans cet exemple, l'insertion de la pochette 1 a eu pour effet de relier la buse de droite 11 avec l'orifice d'entrée 4, l'autre buse 10 rencontrant le trou évidé 9 Les buses 10,11 sont munies d'un joint empêchant l'eau de sortir du trou évidé 9 où la buse 10 qui n'injecte pas entre quand même, mais sa coopération avec la pièce rigide 2 empêche un écoulement accidentel à cet endroit, forçant de la sorte l'intégralité de la pression et du débit d'eau au niveau de la buse active 11.

On remarque sur la figure 3a la buse 11 qui injecte / travaille, ainsi que le joint O-Ring 12 qui oblige l'eau à passer dans l'élément tubulaire 6 qui est dirigé vers le bas.

Sur la même figure, on voit à gauche la buse 10 qui est appuyée dans le trou évidé 9 et où le joint O-Ring 13 empêche l'eau de couler.

Les deux buses 10,11 sont bien entendu reliées à la même canalisation amenant l'eau chaude sous pression et l'effet de vases communicants assure que le débit complet passe bien par la buse de droite 11.

La figure 4 représente l'autre face de la pièce rigide 2, en vue semi-transparente, où l'on voit sur la droite de la figure le trou évidé 9. On voit également sur la gauche l'orifice d'entrée 4.

On remarque en outre au milieu l'orifice de sortie 5 comportant un filtre, ce dernier n'étant disposé que d'un seul côté de la pièce rigide 2.

Les moyens de récupération du mélange eau-dose à la sortie 5 de la pochette ne sont pas illustrés. Tout système approprié peut être envisagé, p.ex. tuyau aboutissant plus loin vers une tasse, réservoir-tampon, etc...

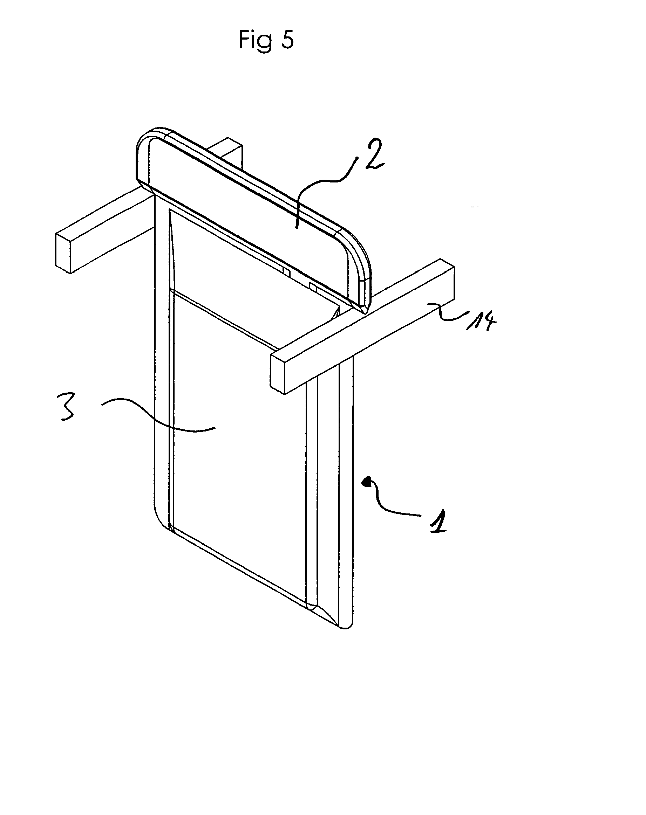

La figure 5 représente de façon très schématique une pochette 1 selon l'invention posée sur un support 14 avant fermeture des mâchoires, elles-mêmes destinées à coincer la dose et introduire les buses 10,11.

## Revendications

1. Pochette (1) pour la préparation d'une boisson, p.ex. du café, comprenant un volume destiné à contenir une dose concentrée, p.ex. de café moulu, un orifice d'entrée (4) et un orifice de sortie (5), tous deux communiquant avec ledit volume, **caractérisé par le fait que** les deux orifices (4,5) sont disposés à proximité l'un de l'autre.

2. Pochette selon la revendication 1 comprenant un élément tubulaire (6) formé de deux extrémités, la première étant reliée à l'un des orifices (4), l'autre (7) étant disposée dans ledit volume, en un endroit distant de l'autre orifice (5).

3. Pochette selon la revendication 2 dans laquelle l'élément tubulaire (6) est relié à l'orifice d'entrée (4).

4. Pochette selon l'une des revendications précédentes adaptée pour être disposée verticalement dans un dispositif pour l'extraction d'une boisson.

5. Pochette selon la revendication 4 dans laquelle les deux orifices (4,5) sont disposés dans la partie supérieure de la pochette (1).

6. Pochette selon l'une des revendications précédentes comprenant une pièce rigide (2) adaptée pour être fixée dans un dispositif d'extraction.

7. Pochette selon la revendication 6 dans laquelle la pièce rigide (2) comporte les orifices (4,5).

8. Dispositif pour l'extraction d'une boisson adapté pour l'utilisation d'une pochette (1) telle que définie dans les revendications précédentes.

9. Dispositif selon la revendication 8 comprenant deux conduits d'entrée d'eau (10,11) disposés de manière à se connecter à deux faces opposées de la pochette (1).

## Patentansprüche

1. Beutel (1) für die Zubereitung eines Getränks, zum Beispiel von Kaffee, der ein Volumen, das eine konzentrierte Dosis, zum Beispiel gemahlenen Kaffee, aufnehmen soll, eine Einlassöffnung (4) und eine Auslassöffnung (5), wobei beide mit dem Volumen in Verbindung stehen, umfasst, **dadurch gekennzeichnet, dass** die beiden Öffnungen (4, 5) in der Nähe voneinander angeordnet sind.

2. Beutel nach Anspruch 1, der ein schlauchförmiges Element (6) umfasst, das mit zwei Enden ausgebildet ist, wobei das erste mit einer der Öffnungen (4) verbunden ist und wobei das andere (7) an einer Stelle, die von der Öffnung (5) entfernt ist, in dem Volumen angeordnet ist.

3. Beutel nach Anspruch 2, wobei das schlauchförmige Element (6) mit der Eingangsöffnung (4) verbunden ist.

4. Beutel nach einem der vorhergehenden Ansprüche, der dazu ausgeführt ist, vertikal in einer Vorrichtung zum Extrahieren eines Getränks angeordnet zu sein.

5. Beutel nach Anspruch 4, wobei die beiden Öffnungen (4, 5) in dem oberen Teil des Beutels (1) angeordnet sind.

6. Beutel nach einem der vorhergehenden Ansprüche, der ein starres Teil (2) umfasst, das zur Befestigung in einer Extraktionsvorrichtung ausgeführt ist.

7. Beutel nach Anspruch 6, wobei das starre Teil (2) Öffnungen (4, 5) aufweist.

8. Vorrichtung zum Extrahieren eines Getränks, die zur Verwendung eines Beutels (1) wie dem in den vorhergehenden Ansprüchen definierten ausgeführt ist.

9. Vorrichtung nach Anspruch 8, die zwei Wassereinlassleitungen (10, 11) umfasst, die so angeordnet sind, dass sie mit zwei einander gegenüberliegenden Flächen des Beutels (1) verbunden sind.

## Claims

1. Pouch (1) for preparing a beverage, e.g. coffee, comprising a space intended to contain a concentrated dose, e.g. of ground coffee, an inlet opening (4) and an outlet opening (5), both communicating with said space, **characterized in that** the two openings (4,5) are disposed in the vicinity of each other.

2. Pouch according to Claim 1 comprising a tubular element (6) formed of two ends, the first being connected to one of the openings (4), the other (7) being disposed in said space, at a location distant from the other opening (5).

3. Pouch according to Claim 2 wherein the tubular element (6) is connected to the inlet opening (4).

4. Pouch according to any one of the preceding claims adapted to be disposed vertically in a device for the extraction of a beverage.

5. Pouch according to Claim 4 wherein the two openings (4,5) are disposed in the upper part of the pouch (1).

6. Pouch according to any one of the preceding claims comprising a rigid part (2) adapted to be fixed to an extraction device.

7. Pouch according to Claim 6 wherein the rigid part (2) includes the openings (4,5).

8. Device for the extraction of a beverage adapted to use a pouch (1) as defined in the preceding claims.

9. Device according to Claim 8 comprising two water inlet pipes (10,11) disposed in such a manner as to be connected to two opposite faces of the pouch (1).
